# EUROPEAN PATENT APPLICATION

(11) **EP 3 280 106 A1**
(43) Date of publication of application: **07.02.2018**
(21) Application number: 16183140.9
(22) Date of filing: 05.08.2016
(51) Int. Cl.: H04L 27/26

(54) **METHOD AND APPARATUS FOR TRANSMITTING A SIGNAL AND METHOD AND APPARATUS FOR RECEIVING A SIGNAL**

(71) Applicant: NTT DOCOMO, INC., Chiyoda-ku Tokyo (JP)
(72) Inventor: Weitkemper, Petra, 80687 Munich (DE); Kusume, Katsutoshi, 80687 Munich (DE); Bazzi, Jamal, 80687 Munich (DE); Iwamura, Mikio, 80687 Munich (DE)
(74) Representative: Betten & Resch

(57) **Abstract**

A method for transmitting a signal in a communication system having a certain system bandwidth, wherein different parts of the system bandwidth are used for respectively different users or services,
wherein said signal to be transmitted is shaped by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal processing is performed such that a spectral or temporal filter is applied such that said signal does not exceed said thresholds defined by said spectral and/or temporal requirements.

## Description

### FIELD OF THE INVENTION

The present invention relates to a method and apparatus for transmitting a signal and a method and apparatus for receiving a signal.

### BACKGROUND OF THE INVENTION

Orthogonal Frequency Division Multiplexing, OFDM, shows desirable properties in a multiuser scenario as long as all parameters like subcarrier, hereinafter also referred to as SC, spacing and symbol duration are constant in the system and the reception of the signal from all users is fully synchronized. In LTE this synchronous reception is achieved by the so-called timing advance which requires a significant amount of signaling. For future applications this overhead for the synchronization may be too inefficient, e.g. for machine-type communication, MTC, traffic, and therefore perfect synchronization may not be guaranteed. Furthermore, the diverse kinds of applications that should be supported by 5G within one band will have very different requirements and one fixed SC spacing may not be efficient as well. In such cases, OFDM is no longer orthogonal and the high out-of-band, OOB, radiation introduces significant interference to the neighboring user. So-called guard SC between the users can reduce the interference, but due to the spectrum of OFDM a large amount of guard SCs would be needed leading to dramatically reduced efficiency.

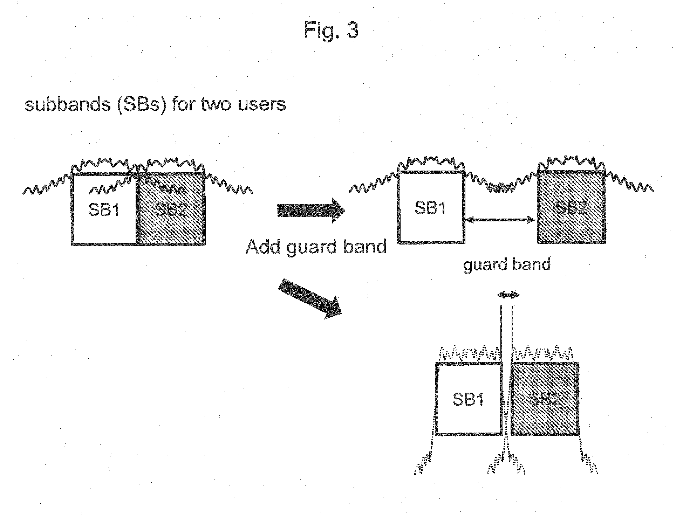

Figure 3 illustrates additional guard bands, including guard SCs, between subbands of different users. For conventional OFDM transmission, wide guard bands, i.e. a large number of guard SCs, are necessary to mitigate or avoid interference, so that overall resource efficiency is reduced.

Therefore, OFDM may not best address the above described requirements and new waveforms may be needed. One alternative is filtered OFDM, f-OFDM, where the entire system band is divided in several subbands and each subband is filtered individually to minimize the out of band emission. Another alternative is windowed OFDM, W-OFDM, where a window is applied to the signal in the time domain in order to reduce the side lobes of each subcarrier and consequently also the OOB emission. Although the following description focusses on f-OFDM, the same idea can be applied to other techniques like W-OFDM.

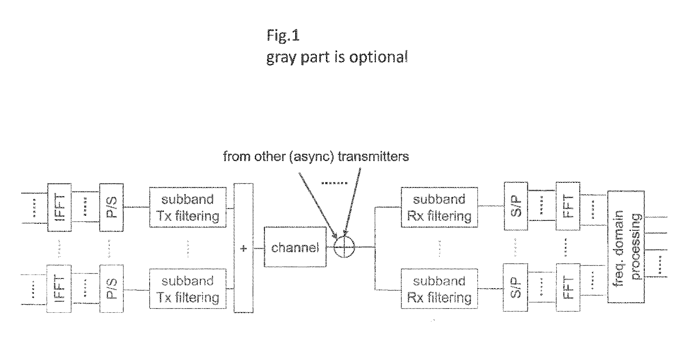

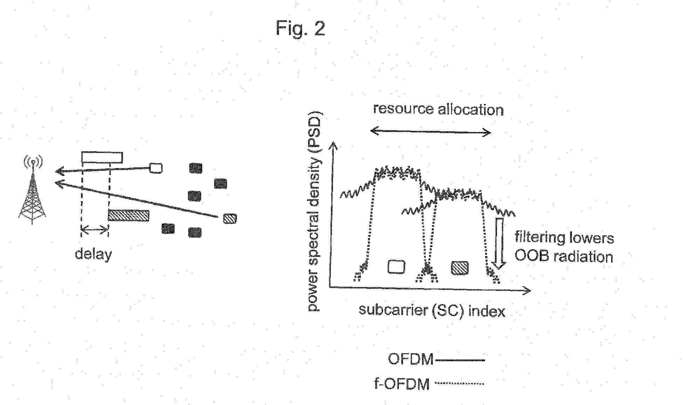

Figure 1 shows a schematic overview of the f-OFDM transmission scheme in a transmitter and a receiver. Figure 2 illustrates different waveforms of OFDM vs. f-OFDM transmission, wherein the filtering significantly reduces the out-of-band radiation resulting in possible interference with transmissions in neighboring subbands of different transmissions or users.

Although the basic shape of the filter in frequency domain should be of a bandpass shape, quite different particular filter coefficients in time domain or the resulting frequency shape have been proposed in literature for the sake of OOB suppression. The filter coefficients can be chosen arbitrarily as long as certain criteria are fulfilled and many design approaches are known like Chebyshev or Butterworth design.

Different designs and different parameters lead to different OOB emission shape in terms of power spectral density (PSD), but even for filters with different shape, the interference level at the neighboring transmission or BLER (block error rate) performance can be the same.

Usually the filter design is chosen based on several practical considerations like desired frequency shape, filter length in time domain, shape in time domain, e.g. to avoid or minimize Inter-symbol interference (ISI), efficient implementation, computational complexity or any other criteria. Such design and optimization criteria may be different depending on different priorities, e.g. cost, performance, scalability, etc. This means that different vendors or manufacturers may choose different filter designs according to their preferences.

The usage of filters leads to the following problems. In addition to the filtering or windowing at the transmitter side, also at the receiver side, appropriate signal processing is needed. Thereby for optimal reception in terms of maximum SNR, the receive filter should be the matched filter, e.g. the time reversed conjugate complex of the transmit filter. In order to achieve this, the receiver has to know exactly the filter impulse response used at the transmitter. But also with relaxed requirement on the SNR, the knowledge of the transmit filter is relevant for the receiver, e.g. in order to estimate the interference.

In the prior art approaches, which include transmit filtering the receiver therefore exactly knows the transmit filter and applies the matched filter or designs the receiver based on this perfect knowledge.
There are approaches, which use a spectral mask. E.g. in LTE the OOB emission is limited by the definition of a spectral mask. The spectral mask is applied to the full system band in order to limit the interference between different systems. For such a wide band mask as used in LTE as a system mask there is no need for adapting the receiver processing to the mask as the influence of the signal processing to achieve the mask (either windowing or filtering) on the performance is negligible. This becomes different in systems, which use narrowband filters to separate users. In such systems there is potentially a large interference between such users and therefore, the impact of the signal processing to the performance is much higher, which according to the prior art requires a perfect match between the filters of the transmitter and the receiver side.

For future systems, however, interference may not only occur between different systems but may also occur between users allocated in the same band on adjacent frequencies and without perfect orthogonality.

While in some prior art related to filter design, the filter shape is designed or defined as maximum and minimum PSD (i.e. a spectral mask), the knowledge of this mask is not exploited by the receiver to decide on the signal processing with limited degradation compared to perfect knowledge of the transmit processing.

### SUMMARY OF THE INVENTION

According to one embodiment there is provided a method for transmitting a signal from a transmitter to a receiver in a communication system having a certain system bandwidth, wherein different parts of the system bandwidth are used for respectively different users or services,
wherein said signal to be transmitted is shaped by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal processing is performed such that said signal does not exceed said thresholds defined by said spectral and/or temporal requirements.

By applying a signal processing in a manner such that the signal does not exceed the thresholds it can be ensured that while there is some flexibility with respect to the signal processing at the transmitter side, this flexibility is limited. This limitation in terms of flexibility at the transmitter side then can be exploited at the receiver side by choosing an arbitrary signal processing, which, however, takes into account and exploits the knowledge about the transmitter side signal processing to fulfil certain requirements, e.g. in terms of interference thresholds or performance loss. In this manner there is per definition a maximum for the mismatch between signal processing at the receiver and the transmitter side or for the interference between users, which consequently also limits the performance loss caused by such a mismatch or interference.

According to one embodiment the method further comprises: Based on the knowledge of said spectral and/or temporal requirements applied on the transmitter side, applying predefined requirements on the receiver side regarding interference suppression or performance.

In this manner it can be ensured that the signal at the receiving side fulfils some predefined requirements regarding interference suppression or performance.

According to one embodiment said signal processing applies a spectrum mask to the signal to be transmitted, said spectrum mask defining a maximum and a minimum threshold for the power spectrum density for the part of the system bandwidth used for a specific service or user.

The definition of a spectrum mask is an efficient and convenient way to define the transmission characteristics at the transmitter side. The maximum threshold and the minimum threshold for the power spectrum density define a degree of flexibility for the signal processing at the transmitter side, which can then be exploited by appropriate signal processing at the receiver side.

According to one embodiment the method further comprises: Applying a different mask at the receiver side than at the transmitter side, but said mask at the receiver side being chosen such that the fulfilment of predefined requirements regarding interference and/or performance is fulfilled.

According to this embodiment the receiver may apply a mask, which does not exactly match the mask at the transmitter side..g. The gap between maximum threshold and minimum threshold of the mask at the receiver side may be somewhat larger than the one at the transmitter side. However, as long as the mask at the receiver side is appropriately chosen, e.g. by not deviating too much from the mask at the transmitting side, still certain defined requirements regarding interference and/ can be fulfilled. The mask at the receiver side may be chosen in any way based on the knowledge about the mask on the transmitter side such that the certain defined requirements regarding interference can be fulfilled.

According to one embodiment the signal processing applied at the transmitting side and the signal processing at the receiver side involves applying a spectral and/or temporal filter.

By applying a spectral and/or temporal filter in a manner such that the signal does not exceed the thresholds it can be ensured that while there is some flexibility with respect to the filter design at the transmitter side, this flexibility is limited. This limitation in terms of flexibility then can be exploited at the receiver side by choosing an arbitrary filter, which, however, also fulfils the requirements, i.e. which also does not exceed the thresholds. In this manner there is per definition a maximum for the mismatch between the filters at the receiver and the transmitter side, which consequently also limits the performance loss caused by such a mismatch.

According to one embodiment said predefined spectral and/or temporal requirements are known at the receiver side receiving said signal, and wherein
said spectral or temporal filter applied at the transmitter side is chosen to fulfil said spectral and/or temporal requirements to thereby ensure that the receiving side has knowledge about the chosen filter and to thereby enable the receiving side to chose a filter within said requirements to ensure that the filter chosen at the receiving side matches with the filter chosen at the transmitting side.

Having the receiver know the requirements enables the receiver to choose a "matching" filter within the thresholds defined by the requirements.

According to one embodiment said predefined spectral and/or temporal requirements are chosen such that if the transmitter transmitting said signal and the receiver receiving said signal both choose a spectral or temporal filter, which fulfil said spectral and/or temporal requirements, the interference caused by a non-perfect match between the filter at the transmission side and at the receiver side is below a certain value.

This ensures that despite the mismatch between transmitter and receiver filter the resulting performance loss and interference does not exceed a certain threshold.

According to one embodiment said spectral and/or temporal requirements define a spectral and/or temporal mask indicating an upper limit and a lower limit for the power spectral density in the frequency or in the time domain, and
wherein the gap between the upper limit and the lower limit define the maximum mismatch between the filter applied at the transmitter side and the filter applied at the receiver side, and wherein
the maximum mismatch between the filter applied at the transmitter side and the filter applied at the receiver side defines a maximum interference or a maximum performance loss caused by a mismatch between the filters applied at the transmitter side and the receiver side.

The definition of a mask is an elegant way of achieving a "minimum match" or a "maximum mismatch" between the filters at the transmitter and the receiver side.

According to one embodiment the spectral and/or temporal requirements are set to fulfil requirements with respect to spectral and/or temporal interference.

This ensures that the spectral and/or temporal interference does not go beyond the set requirements.

According to one embodiment the signal to be transmitted is transmitted on a fraction of the system bandwidth and other signals can be transmitted on a neighboring fraction of the system bandwidth.

This allows the use of the approach e.g. to multi-user transmissions.

According to one embodiment the spectral and/or temporal requirements are defined such that any combination of Tx and Rx signal processing fulfilling these requirements leads to interference in time and frequency domain not exceeding certain thresholds.

This enables to set limits for the interference in the time and frequency domain.

According to one embodiment the spectral and/or temporal requirements are either parametrized with respect to the bandwidth or specific requirements are set for different bandwidths.

This enables preferable implementations for defining the masks in advance.

According to one embodiment there is provided a method for receiving a signal in a communication system having a certain system bandwidth, wherein different parts of the system bandwidth are used for respectively different users or services,
wherein said signal to be received has been shaped by signal processing at the transmitter side to fulfill first predefined spectral and/or temporal requirements, wherein said predefined requirements are defined as thresholds of maximum and/or minimum power density in the frequency and/or time domain, wherein said requirements are defined for the part of the system bandwidth used for a specific service or user,
wherein said signal to be received is shaped by signal processing at the receiver side to fulfill second predefined spectral and/or temporal requirements,
wherein said second predefined requirements are defined as thresholds of maximum and/or minimum power density in the frequency and/or time domain,
wherein said second requirements are defined for the part of the system bandwidth used for a specific service or user,
wherein said signal processing at the receiver side is performed such that said signal does not exceed said thresholds defined by said spectral and/or temporal requirements.

This enable an implementation of a method at the receiving side. By applying a first signal processing fulfill first predefined spectral and/or temporal requirements at the transmitter side and then applying a second signal processing, which fulfils second predefined spectral and/or temporal requirements, the receiver can be adapted in a way to the transmitter such that there is a maximum degree of mismatch between both. For example there may be a mask applied to the transmitter and the same or a slightly different spectrum mask may be applied to the receiver as "second signal processing". In this manner a certain maximum mismatch between filters at the transmitter and receiver side can be achieved. According to one embodiment the method for receiving further comprises the features as defined in one or more of the embodiments of the methods for transmitting a signal.

According to one embodiment there is provided an apparatus for transmitting a signal in a communication system having a certain system bandwidth, wherein different parts of the system bandwidth are used for respectively different users or services, said apparatus comprising:
A signal shaper for shaping said signal to be transmitted by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal shaper is adapted to perform said signal processing such that a spectral or temporal filter is applied such that said signal does not exceed said thresholds defined by said spectral and/or temporal requirements.

This enables the implementation of an apparatus for transmitting according to an embodiment of the invention.

According to one embodiment there is provided an apparatus for receiving from a transmitter a signal in a communication system having a certain system bandwidth, wherein different parts of the system bandwidth are used for respectively different users or services,
wherein said signal to be received has been shaped by signal processing at the transmitter side to fulfill first predefined spectral and/or temporal requirements, wherein said first predefined requirements are defined as thresholds of maximum and/or minimum power density in the frequency and/or time domain, wherein said requirements are defined for the part of the system bandwidth used for a specific service or user,
said apparatus comprising:
a signal shaper for shaping said signal to be received by signal processing at the receiver side to fulfill second predefined spectral and/or temporal requirements, wherein said second predefined requirements are defined as thresholds of maximum and/or minimum power density in the frequency and/or time domain,
wherein said second requirements are defined for the part of the system bandwidth used for a specific service or user,
wherein said signal shaper is adapted to perform said signal processing such that a said signal does not exceed said thresholds defined by said second spectral and/or temporal requirements.

This enables the implementation of an apparatus for receiving according to an embodiment of the invention.

According to one embodiment there is provided a computer program comprising computer executable code, which when being executed by a computer enables said computer to perform a method according to one of the embodiments of the invention.

### DESCRIPTION OF THE DRAWINGS

Figure 1 shows a schematic overview of the f-OFDM transmission scheme in a transmitter and a receiver.
Figure 2 shows an example of asynchronous access to transmission resources by two out of several MTC devices.
Figure 3 shows the concept of addition guard subcarriers between subbands used by different users in OFDM and f-OFM transmissions.
Figure 4 shows the concept of a spectral mask consisting of upper and lower bounds on the PSD and two example filter shapes in frequency domain fulfilling the spectral mask.
Figure 5 shows the concept of a temporal mask and two example filter shapes in time domain fulfilling the temporal mask.

### DETAILED DESCRIPTION

At first, some terms used in the description will be defined in the following list of abbreviations.
- DL: downlink
- MTC: machine-type communications
- OFDM: orthogonal frequency division multiplex
- OOB: out-of-band
- PSD: power spectral density
- SB: subband
- SC: subcarrier
- UL: uplink

As has been explained before, in the prior art approaches the receiver side has to know the exact parameters of the filter used at the transmitter side in order to match the receiving side filter to the one of the transmitting side.

There are different options how the receiver can know the transmit filter: Either the exact filter is fixed from the beginning (by convention or definition) or it is signaled before the transmission. The latter option is disadvantageous due to its high amount of data consumption, as sufficiently quantized filter coefficients have to be transmitted before the actual data transmission. The first option is more efficient.

However, fixing the filter impulse response once and forever also has a couple of drawbacks at least for systems that should be open for different vendors to provide devices for this system. In a wireless system which should work well with devices from different vendors, a certain amount of standardization is needed. The receiver has to have certain knowledge of the transmitter processing and vice versa in order to work as intended. One aspect is the digital signal processing of the transmit signal as explained above.

In practice this scenario has several difficulties, for example it is difficult to agree on particular filters to be standardized, with fixed filters there is no possibility to improve system performance in the future due to increased signal processing capabilities (e.g. Moores law), etc.

According to embodiments of the present invention there is provided an approach, which on the one hand avoids the need for signaling the filter properties while at the same time provides some flexibility with respect to the filter design and still achieves a certain standard with respect to performance loss and/or interference.

According to one embodiment this is achieved by defining some "minimum requirements" for the filter to be used at the transmitter in the sense that these requirements specify only the features that are really essential for the performance of the system, but leave some room for improvement or flexibility as long as these requirements are fulfilled. At the same time the fulfilment of these requirements achieves a certain minimum performance e.g. with respect to interference and performance loss during transmission and reception.

In other words, according to one embodiment there is provided a method and an apparatus for transmitting (and also a method and apparatus for receiving) a multicarrier signal, wherein the signal is generated by a transmit signal processing not predefined in all details but rather defined by requirements (or "boundaries" or "thresholds") on the signal shape in time and/or frequency, and the receiver processing is done based on the knowledge of such requirements rather than on the particular knowledge of the exact transmit processing.

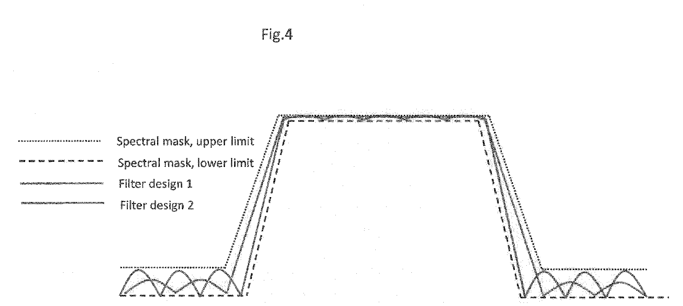

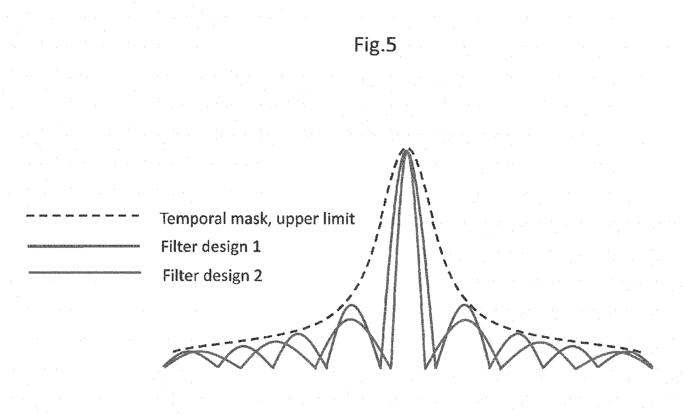

According to one embodiment only certain properties of the filter are fixed when designing the system and it is then left up to the vendors to choose a particular filter with the defined properties. In this regard relevant properties wrt interference caused to other users is to be understood as being the spectral and/or time domain shape of the filter. According to one embodiment such a shape in the spectral and/or time domain can be achieved by a mask, defining maximum and possibly also minimum values of PSD at certain frequencies or time instances as illustrated in Fig. 4 and 5. Fig. 4 schematically illustrates a spectral mask in the frequency domain, which is defined by an upper limit for the PSD and a lower limit for the PSD for the various frequencies (e.g. the frequencies of a band used for the transmission of data for a certain user). Two alternative possible filter designs lying inside the mask are also illustrated. Fig. 5 schematically illustrates a temporal mask in the time domain. The mask in Fig. 4 only is defined by an upper limit. Also Fig. 5 shows two possible filter designs lying inside the temporal mask.

By the definition of such a mask as shown in Fig. 4 or Fig. 5, many relevant properties can be ensured, e.g. maximum filter length, maximum OOB emission, distribution of the OOB emission, possible ISI etc.

The mask is not only known at the transmitter side but also at the receiver side. It thereby defines "requirements" or "boundary conditions", which the filter has to fulfil at the transmitter side.

The receiver side then can use its knowledge about the mask to chose a filter at the receiver side, which also is chosen such that it lies within the mask.

As long as the mask is defined in a proper way, which means as long as the variation allowed by the mask for the filter at the transmitter side is sufficiently small, this knowledge is then be sufficient for the receiver to choose a proper receive filter within the mask without sacrificing the performance beyond a certain threshold.

With the scheme, the receiver does not know the exact transmit filter, but it knows the shape in a detail that depends on the definition of the mask. If the mask is very strict (meaning max and min value are very close), the receiver has a quite clear knowledge about the applied transmit filter. If the receiver now chooses another filter (independently from the receiver choice) also fulfilling the mask, it is ensured that there is a very high similarity between the transmit and the receiver filter and the resulting performance loss due to the remaining mismatch between transmit and receive filter is limited. The maximum loss depends on the strictness of the mask and in the extreme case that upper and lower bound of the PSD are the same, the transmit filter is known exactly at the receiver.

This embodiment therefore proposes to fix the requirements of the transmit processing in terms of a spectral and/or a temporal mask for a particular type of transmission where the transmitter chooses a filter fulfilling the requirements and the receiver chooses the receiver processing based on this knowledge, e.g. by also using a filter fulfilling this mask leading to a performance close to optimal in the sense of perfect knowledge of the transmitter processing without the need to signal the filter impulse response or window shape or to fix them in advance once forever.

According to one embodiment the requirements at the transmitter and the receiver side not necessarily apply the application of a "filter", they may also involve other signal processing, which leads to a maximum and/or minimum threshold at the transmitter side, which can be regarded as a "spectrum mask" being applied at the transmitter side. This spectrum mask" can then be exploited at the receiver side by an appropriate signal processing, which ensures certain requirements for interference and/ or performance.

According to one embodiment the requirements, i.e. the filter mask, should be defined in a way that the loss due to the possible remaining mismatch is limited to a certain value. The skilled person will be able to choose the shape of the mask such that the resulting performance loss caused by a less than perfect match between the filters at the transmitter and the receiver side will not exceed a desired value.
This can for example also be achieved by experimenting with different mask shapes, e.g. by trying different gaps between the maximum and minimum PSD of a mask and various filter shapes at the transmitter and the receiver side. If the performance loss is higher than desired, the gap between the maximum and minimum PSD of the mask may have to be decreased, thereby leading to a decrease in the maximum performance loss. The skilled person will therefore be able to appropriately choose a certain mask, which achieves the desired characteristics with respect to maximum performance loss.

According to this embodiment therefore the details of the signal processing with respect to a spectral or temporal filter are not specified, but only the requirements in terms of a spectral and/or temporal mask. The receiver then is designed based on the assumption that the transmitter uses a filter inside the mask, in other words, it is designed such that it also chooses a filter inside the mask.

Consequently, the definition of such mask has three main technical effects:
- To ensure a maximum interference in time and/or frequency domain between transmissions with in the same band.
- To ensure that the receiver has a sufficiently detailed knowledge about the signal processing done at the transmitter side in order to design a proper receiver, which is capable to apply a filter, which with sufficient accuracy matches the filter used by the transmitter
- To avoid the need for signaling filter parameters from the transmitter to the receiver.

According to one embodiment the mask at the transmitter and the mask at the receiver do not need to be identical. The mask at the receiver may also be designed such that the difference between the maximum threshold and the minimum threshold (i.e. the "gap") is larger than at the transmitter side. If the difference is not too large and is chosen appropriately, it will still be possible to achieve a certain desired interference suppression requirement.

It should be noted here, that according to embodiments the minimum threshold for the spectrum mask should preferably be above zero. Or in other words, the gap between minimum and maximum threshold should not be too large, in order to set a reasonable limit for the degree of flexibility at the transmitter side, so that by appropriately choosing the mask at the receiver side a sufficient maximum degree of mismatch can be achieved.

It should, however, be further noted that the embodiments the minimum threshold for the spectrum mask does not need to be above zero over the full frequency range or over the whole allocated bandwidth in all embodiments. There may be one or more certain regions, in which the minimum threshold may be allowed to be zero. Those ranges should, however, be chosen such that still the spectrum mask is sufficiently narrowly defined so that the resulting degree of flexibility still achieves the desired maximum degree of mismatch between the signal processing or filtering at the transmitter side and at the receiver side.

Some further aspects of embodiments will be described in the following.

In case transmissions can occupy different bandwidth and signal processing of the possibly interfering transmissions should be done separately, different realizations of signal processing can be applied to these transmissions and also the requirements in terms of a mask can be different. Such different masks can be defined either by optimizing for a certain set of conditions or by a general description with certain parameters referring to the different conditions like allocated bandwidth. This could for example be done by scaling a certain mask to the allocated bandwidth. This would simplify the specification further. Another possibility is to define a certain number of masks for a certain set of conditions (e.g. bandwidth) which then needs to be known at transmitter and receiver. As the allocated bandwidth is usually anyway known on both sides or signaled, this could be used to assume or determine the correct mask out of the set and no additional signaling is needed.

In contrast to many existing systems, according to embodiments of the present invention OOB emission requirements may not only be defined for the system bandwidth, but in case of possibly interfering subbands within the system bandwidth requirements may be defined per subband and therefore a subband wise mask can be defined.

The proposed method can be applied in UL and DL, as in both cases interference between transmissions can occur and in both cases a receiver processing should consider the transmitter processing.

The proposed method can be applied to W-OFDM as well or combination of W-OFDM and f-OFDM.

According ton one further embodiment there is provided a method for transmitting a signal in a communication system having a certain system bandwidth, wherein different parts of the system bandwidth are used for respectively different users or services. This means that a certain part of the system bandwidth may be used for transmitting the signal of a first user (or a first service) while a second part of the system bandwidth may be used to transmit the signal of a second user (or a second service).

The signal to be transmitted by the transmitter is "shaped" by signal processing at the transmitter side to fulfill predefined spectral and/or temporal requirements. The "predefined spectral and/or temporal requirements "here can mean a mask, which defines maximum and/or minimum values of the filter, e.g. by defining thresholds of maximum and/or minimum power density in the frequency and/or time domain.

According to one embodiment the requirements are defined for the part of the system bandwidth used for a specific service or user. The said signal processing on the transmitter side is performed such that a spectral or temporal filter is applied such that said signal does not exceed said thresholds defined by said spectral and/or temporal requirements.

In this manner there is provided a certain degree of flexibility regarding the selection of the filter at the transmitter side, wile at the same time enabling the receiver to choose an appropriate filter, which matches the transmit filter such that the mismatch does not exceed the extent defined by the thresholds.

According to one embodiment the predefined spectral and/or temporal requirements are known at the receiver side receiving said signal, and the spectral or temporal filter applied at the transmitter side is chosen to fulfil said spectral and/or temporal requirements. Thereby it is then ensured that the receiving side has knowledge about the chosen filter and the receiving side is enabled to chose a filter within said requirements to ensure that the filter chosen at the receiving side matches with the filter chosen at the transmitting side. The match, due to the nature of the requirements, which enable some degree of flexibility, is not a perfect match, but there is a match at least within the degree of flexibility as defined by the thresholds.

According to one embodiment the predefined spectral and/or temporal requirements are chosen such that if the transmitter transmitting the signal and the receiver receiving the signal both choose a spectral or temporal filter, which fulfil the spectral and/or temporal requirements, the interference caused by a non-perfect match between the filter at the transmission side and at the receiver side is below a certain value. This can be achieved by choosing the maximum and/or minimum thresholds and the gap between them appropriately.

According to one embodiment the spectral and/or temporal requirements define a spectral and/or temporal mask indicating an upper limit and a lower limit for the power spectral density in the frequency domain or in the time domain. The gap between the upper limit and the lower limit thereby defines the maximum mismatch between the filter applied at the transmitter side and the filter applied at the receiver side. The maximum mismatch between the filter applied at the transmitter side and the filter applied at the receiver side defines a maximum interference or a maximum performance loss caused by a mismatch between the filters applied at the transmitter side and the receiver side.

## Claims

1. A method for transmitting a signal from a transmitter to a receiver in a communication system having a certain system bandwidth, wherein different parts of the system bandwidth are used for respectively different users or services,
wherein said signal to be transmitted is shaped by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal processing is performed such that said signal does not exceed said thresholds defined by said spectral and/or temporal requirements.

2. The method of claim 1, further comprising:
applying receiver signal processing at the receiver side wherein said receiver signal processing fulfills predefined receiver requirements regarding interference suppression,
wherein said predefined receiver requirements are defined as thresholds of maximum and/or minimum power density in the frequency and/or time domain,

3. The method of claim 1 or 2, wherein said signal processing applies a spectrum mask to the signal to be transmitted, said spectrum mask defining a maximum and a minimum threshold for the power density for the part of the system bandwidth used for a specific service or user.

4. The method of claim 1, 2 or 3, further comprising:
Applying a different mask at the receiver side than at the transmitter side, but said mask at the receiver side being chosen based on the knowledge about the mask on the transmitter such that the fulfilment of predefined requirements regarding interference and/or performance is fulfilled.

5. The method of one of the preceding claims, wherein the signal processing applied at the transmitting side and the signal processing at the receiver side involves applying a spectral and/or temporal filter

6. The method of one of the preceding claims,
wherein said predefined spectral and/or temporal requirements are known at the receiver side receiving said signal, and wherein
said spectral or temporal filter applied at the transmitter side is chosen to fulfil said spectral and/or temporal requirements to thereby ensure that the receiving side has knowledge about the chosen filter and to thereby enable the receiving side to choose a filter within said requirements to ensure that the filter chosen at the receiving side matches with the filter chosen at the transmitting side.

7. The method of one of the preceding claims,, wherein
said predefined spectral and/or temporal requirements are chosen such that if the transmitter transmitting said signal and the receiver receiving said signal both choose a spectral or temporal filter, which fulfil said spectral and/or temporal requirements, the interference caused by a non-perfect match between the filter at the transmission side and at the receiver side is below a certain value.

8. The method of one of the preceding claims, wherein
said spectral and/or temporal requirements define a spectral and/or temporal mask indicating an upper limit and a lower limit for the power spectral density in the frequency or in the time domain, and
wherein the gap between the upper limit and the lower limit define the maximum mismatch between the filter applied at the transmitter side and the filter applied at the receiver side, and wherein
the maximum mismatch between the filter applied at the transmitter side and the filter applied at the receiver side defines a maximum interference or a maximum performance loss caused by a mismatch between the filters applied at the transmitter side and the receiver side.

9. The method according to one of the preceding claims, wherein the spectral and/or temporal requirements are set to fulfil requirements with respect to spectral and/or temporal interference.

10. The method according to one of the preceding claims, wherein the signal to be transmitted is transmitted on a fraction of the system bandwidth and other signals can be transmitted on a neighboring fraction of the system bandwidth.

11. The method according to one of the preceding claims, wherein the spectral and/or temporal requirements are defined such that any combination of Tx and Rx signal processing fulfilling these requirements leads to interference in time and frequency domain not exceeding certain thresholds

12. The method according to one of the preceding claims, wherein the spectral and/or temporal requirements are either parametrized with respect to the bandwidth or specific requirements are set for different bandwidths.

13. A method for receiving a signal by a receiver from a transmitter in a communication system having a certain system bandwidth, wherein different parts of the system bandwidth are used for respectively different users or services,
wherein said signal to be received has been shaped by signal processing at the transmitter side to fulfill first predefined spectral and/or temporal requirements, wherein said predefined requirements are defined as thresholds of maximum and/or minimum power density in the frequency and/or time domain, wherein said requirements are defined for the part of the system bandwidth used for a specific service or user,
wherein said signal to be received is shaped by signal processing at the receiver side to fulfill second predefined spectral and/or temporal requirements,
wherein said second predefined requirements are defined as thresholds of maximum and/or minimum power density in the frequency and/or time domain,
wherein said second requirements are defined for the part of the system bandwidth used for a specific service or user,
wherein said signal processing at the receiver side is performed such that said signal does not exceed said thresholds defined by said spectral and/or temporal requirements.

14. An apparatus for transmitting a signal to a receiver in a communication system having a certain system bandwidth, wherein different parts of the system bandwidth are used for respectively different users or services, said apparatus comprising:
A signal shaper for shaping said signal to be transmitted by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal shaper is adapted to perform said signal processing such that a spectral or temporal filter is applied such that said signal does not exceed said thresholds defined by said spectral and/or temporal requirements.

15. The method or apparatus of one of claims 13 to 14, further comprising the features as defined in one of claims 2 to 12.

## Amended claims

### Amended claims in accordance with Rule 137(2) EPC.

1. A method for transmitting a signal from a transmitter to a receiver in an f-OFDM of W-OFDM communication system having a certain system bandwidth, wherein different parts of the system bandwidth are used for respectively different users or services, and wherein for f-OFDM a spectral is applied to each sub-band individually to minimize out-of band emission for each subcarrier or wherein for W-OFDM a temporal filter in form of a window to reduce the sidelobes for each subcarrier;
wherein said signal to be transmitted is shaped by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal processing is performed such that said signal does not exceed said thresholds defined by said spectral and/or temporal requirements, wherein
said spectral and/or temporal requirements define a spectral and/or temporal mask indicating an upper limit and a lower limit for the power spectral density in the frequency or in the time domain, and
wherein the gap between the upper limit and the lower limit define the maximum mismatch between the filter applied at the transmitter side and the filter applied at the receiver side.

2. The method of claim 1, further comprising:
applying receiver signal processing at the receiver side wherein said receiver signal processing fulfills predefined receiver requirements regarding interference suppression,
wherein said predefined receiver requirements are defined as thresholds of maximum and/or minimum power density in the frequency and/or time domain,

3. The method of claim 1 or 2, wherein said signal processing applies a spectrum mask to the signal to be transmitted, said spectrum mask defining a maximum and a minimum threshold for the power density for the part of the system bandwidth used for a specific service or user.

4. The method of claim 1, 2 or 3, further comprising:
Applying a different mask at the receiver side than at the transmitter side, but said mask at the receiver side being chosen based on the knowledge about the mask on the transmitter such that the fulfilment of predefined requirements regarding interference and/or performance is fulfilled.

5. The method of one of the preceding claims, wherein the signal processing applied at the transmitting side and the signal processing at the receiver side involves applying a spectral and/or temporal filter

6. The method of one of the preceding claims,
wherein said predefined spectral and/or temporal requirements are known at the receiver side receiving said signal, and wherein
said spectral or temporal filter applied at the transmitter side is chosen to fulfil said spectral and/or temporal requirements to thereby ensure that the receiving side has knowledge about the chosen filter and to thereby enable the receiving side to choose a filter within said requirements to ensure that the filter chosen at the receiving side matches with the filter chosen at the transmitting side.

7. The method of one of the preceding claims, , wherein
said predefined spectral and/or temporal requirements are chosen such that if the transmitter transmitting said signal and the receiver receiving said signal both choose a spectral or temporal filter, which fulfil said spectral and/or temporal requirements, the interference caused by a non-perfect match between the filter at the transmission side and at the receiver side is below a certain value.

8. The method of one of the preceding claims, wherein
wherein
the maximum mismatch between the filter applied at the transmitter side and the filter applied at the receiver side defines a maximum interference or a maximum performance loss caused by a mismatch between the filters applied at the transmitter side and the receiver side.

9. The method according to one of the preceding claims, wherein the spectral and/or temporal requirements are set to fulfil requirements with respect to spectral and/or temporal interference.

10. The method according to one of the preceding claims, wherein the signal to be transmitted is transmitted on a fraction of the system bandwidth and other signals can be transmitted on a neighboring fraction of the system bandwidth.

11. The method according to one of the preceding claims, wherein the spectral and/or temporal requirements are defined such that any combination of Tx and Rx signal processing fulfilling these requirements leads to interference in time and frequency domain not exceeding certain thresholds

12. The method according to one of the preceding claims, wherein the spectral and/or temporal requirements are either parametrized with respect to the bandwidth or specific requirements are set for different bandwidths.

13. A method for receiving a signal by a receiver from a transmitter in a communication system having a certain system bandwidth, wherein different parts of the system bandwidth are used for respectively different users or services,
wherein said signal to be received has been shaped by signal processing at the transmitter side to fulfill first predefined spectral and/or temporal requirements, wherein said predefined requirements are defined as thresholds of maximum and/or minimum power density in the frequency and/or time domain, wherein said requirements are defined for the part of the system bandwidth used for a specific service or user,
wherein said signal to be received is shaped by signal processing at the receiver side to fulfill second predefined spectral and/or temporal requirements,
wherein said second predefined requirements are defined as thresholds of maximum and/or minimum power density in the frequency and/or time domain,
wherein said second requirements are defined for the part of the system bandwidth used for a specific service or user,
wherein said signal processing at the receiver side is performed such that said signal does not exceed said thresholds defined by said spectral and/or temporal requirements, wherein
said spectral and/or temporal requirements define a spectral and/or temporal mask indicating an upper limit and a lower limit for the power spectral density in the frequency or in the time domain, and
wherein the gap between the upper limit and the lower limit define the maximum mismatch between the filter applied at the transmitter side and the filter applied at the receiver side.

14. An apparatus for transmitting a signal to a receiver in a communication system having a certain system bandwidth, wherein different parts of the system bandwidth are used for respectively different users or services, said apparatus comprising:
A signal shaper for shaping said signal to be transmitted by signal processing at the transmitter side to fulfill predefined spectral and/or temporal requirements,
wherein said predefined requirements are defined as thresholds of maximum and/or minimum power density in the frequency and/or time domain,
wherein said requirements are defined for the part of the system bandwidth used for a specific service or user,
wherein said signal shaper is adapted to perform said signal processing such that a spectral or temporal filter is applied such that said signal does not exceed said thresholds defined by said spectral and/or temporal requirements, wherein
said spectral and/or temporal requirements define a spectral and/or temporal mask indicating an upper limit and a lower limit for the power spectral density in the frequency or in the time domain, and
wherein the gap between the upper limit and the lower limit define the maximum mismatch between the filter applied at the transmitter side and the filter applied at the receiver side.

15. The method or apparatus of one of claims 13 to 14, further comprising the features as defined in one of claims 2 to 12.
